# EUROPÄISCHE PATENTSCHRIFT

(11) **EP 3 910 531 B1**
(45) Veröffentlichungstag und Bekanntmachung des Hinweises auf die Patenterteilung: **17.09.2025**
(21) Anmeldenummer: 20174833.2
(22) Anmeldetag: 14.05.2020
(51) Int. Cl.: G06V 20/52, G07C 9/00

(54) **VERFAHREN ZUR ERKENNUNG VON BEWEGUNGSABLÄUFEN UND PASSIERERKENNUNGSSYSTEM**
METHOD FOR DETECTING MOVEMENTS AND PASSENGER DETECTION SYSTEM
PROCÉDÉ DE DÉTECTION DE DÉROULEMENTS DE MOUVEMENTS ET SYSTÈME DE DÉTECTION CORRESPONDANT

(43) Veröffentlichungstag der Anmeldung: 17.11.2021
(73) Patentinhaber: dormakaba Deutschland GmbH, 58256 Ennepetal (DE)
(72) Erfinder: Vollmer, Arno, 77855 Achern (DE); Droll, Gerald, 77815 Bühl (DE)
(74) Vertreter: Balder IP Law, S.L.

(56) Entgegenhaltungen:
- EP-A2- 0 828 233
- CN-B- 106 600 777
- DE-A1- 102005 002 357
- US-A1- 2017 169 643
- GALVIS ALEX ET AL: "A wireless near-IR retro-reflective profiling sensor", GROUND/AIR MULTISENSOR INTEROPERABILITY, INTEGRATION, AND NETWORKING FOR PERSISTENT ISR III, SPIE, 1000 20TH ST. BELLINGHAM WA 98225-6705 USA, vol. 8389, no. 1, 11 May 2012 (2012-05-11), pages 1 - 12, XP060003575, [retrieved on 20120524], DOI: 10.1117/12.918596
- SARTAIN RONALD B.: "Profiling sensor for ISR applications", LASER-BASED MICRO- AND NANOPACKAGING AND ASSEMBLY II, vol. 6963, 3 April 2008 (2008-04-03), pages 1 - 12, XP093061002, ISSN: 0277-786X, DOI: 10.1117/12.796194

## Beschreibung

Die vorliegende Erfindung betrifft ein Verfahren zur berührungslosen Überwachung von wenigstens einem mehrere Bewegungszustände aufweisenden Bewegungsablauf mit einem Passiererkennungssystem, aufweisend eine Bodenkante, insbesondere zur Aufstellung auf einen Boden eines zu überwachenden Passierbereichs, wenigstens eine entlang eines vertikalen Vektors verlaufende und mehrere Sensoren aufweisende erste Sensorleiste zum Erfassen von Bewegungszuständen innerhalb eines Erfassungsbereichs der Sensoren, eine Rechnereinheit zur Auswertung der Bewegungszustände und/oder des Bewegungsablaufs.

Im Stand der Technik sind Verfahren bekannt, die Bewegungsabläufe, insbesondere das Passieren von Personen, durch Erfassungsbereiche hindurch bzw. in diese hinein und/oder aus diesen hinaus mit Erfassungseinheiten erkennen. An Eingängen und Ausgängen von Gebäuden oder Bereichen, insbesondere zugangsbeschränkten Bereichen, werden beispielsweise Drehkreuze, Personenschleusen oder Schranken zur gezielten Einlass- bzw. Auslasskontrolle genutzt.

Nachteilig bei den bekannten Lösungen ist es, dass eine Personenerkennung, insbesondere bei mehreren dicht aufeinander folgenden Personen, nicht zuverlässig genug ausgeführt wird. Weiterer Nachteil ist, dass für die Ausführung des Verfahrens eine hohe Erstreckung des Passiererkennungssystems erforderlich ist.

Aufgabe der vorliegenden Erfindung ist es, die vorstehenden Nachteile zumindest teilweise zu überwinden. Insbesondere ist es Aufgabe der vorliegenden Erfindung, ein Verfahren und/oder ein Passiererkennungssystem bereitzustellen, wobei das Passiererkennungssystem mit hoher Zuverlässigkeit und/oder bei geringem Abstand zwischen zwei aufeinander folgenden Personen oder anderen beweglichen Objekten eine Erkennung der einzelnen Bewegungsabläufe ermöglicht.

Die Aufgabe wird durch den unabhängigen Anspruch 1 gelöst. Vorteilhafte Weiterbildungen des Verfahrens sind in den abhängigen Ansprüchen, der Beschreibung und in den Figuren angegeben. Ferner wird die Aufgabe auch durch ein computerimplementiertes Verfahren nach Anspruch 12 und/oder ein Passiererkennungssystem gemäß Anspruch 13 gelöst. Vorteilhafte Weiterbildungen des computerimplementierten Verfahrens und des Passiererkennungssystems sind in den abhängigen Ansprüchen, in der Beschreibung und in den Figuren angegeben.

Merkmale und Details, die in Zusammenhang mit dem erfindungsgemäßen Verfahren beschrieben sind, gelten dabei auch in Zusammenhang mit dem erfindungsgemäßen computerimplementierten Verfahren und dem erfindungsgemäßen Passiererkennungssystem und umgekehrt. Dabei können die in der Beschreibung und in den Ansprüchen erwähnten Merkmale jeweils einzeln für sich oder in Kombination erfindungswesentlich sein.

Insbesondere wird ein Passiererkennungssystem unter Schutz gestellt, mit dem das erfindungsgemäße Verfahren, insbesondere das Verfahren nach einem der Ansprüche 1 bis 12, ausführbar ist, wie auch ein Verfahren, das mit dem erfindungsgemäßen Passiererkennungssystem nach einem der Ansprüche 13 bis 15 ausgeführt werden kann.

Gemäß einem ersten Aspekt der vorliegenden Erfindung wird ein Verfahren zur berührungslosen Überwachung von wenigstens einem mehrere Bewegungszustände aufweisenden Bewegungsablauf mit einem Passiererkennungssystem angegeben, aufweisend eine Bodenkante, insbesondere zur Aufstellung auf einen Boden eines zu überwachenden Passierbereichs, wenigstens eine entlang eines vertikalen Vektors verlaufende und mehrere Sensoren aufweisende erste Sensorleiste zum Erfassen von Bewegungszuständen innerhalb eines Erfassungsbereichs der Sensoren, eine Rechnereinheit zur Auswertung der Bewegungszustände und/oder des Bewegungsablaufs. Das Verfahren umfasst dabei nachfolgende Schritte:
- Meldung des jeweiligen Sensors der Sensorleiste als aktiv, wenn dieser Sensor etwas innerhalb seines Erfassungsbereichs erfasst und Meldung des jeweiligen Sensors der Sensorleiste als passiv, wenn dieser Sensor innerhalb seines Erfassungsbereichs nichts erfasst,
- Erfassung von wenigstens einem ersten Bewegungszustand und wenigstens einem zweiten Bewegungszustand durch zumindest die erste Sensorleiste mittels der Meldungen der Sensoren, wobei der erste Bewegungszustand und der zweite Bewegungszustand zu jeweils mittelbar oder unmittelbar aufeinander folgenden diskreten Zeitpunkten erfasst werden,
- Übermittlung der Bewegungszustände an die Rechnereinheit,
- Erkennung wenigstens eines Bewegungsablaufs auf Grundlage der übermittelten Bewegungszustände durch die Rechnereinheit, wobei
- sich die erste Sensorleiste in ihrem Einbauzustand maximal bis zu einer Höhe von 1300 mm, bevorzugt 1200 mm, besonders bevorzugt 1100 mm, ganz besonders bevorzugt 1000 mm, ausgehend von der Bodenkante des Passiererkennungssystems erstreckt.

Insbesondere kann sich dabei die erste Sensorleiste maximal bis zu einer Höhe von 950 mm, insbesondere 900 mm, insbesondere 850 mm, insbesondere 800 mm, ausgehend von der Bodenkante des Passiererkennungssystems erstrecken.

Insbesondere kann sich dabei die erste Sensorleiste minimal von einer Höhe von 1 mm, insbesondere 5 mm, insbesondere 10 mm, insbesondere 15 mm, insbesondere 20 mm, insbesondere 25 mm, insbesondere 30 mm, und maximal bis zu der angegebenen Höhe ausgehend von der Bodenkante des Passiererkennungssystems erstrecken.

Mit der Bodenkante des Passiererkennungssystems ist dabei der unterste Punkt des Passiererkennungssystems gemeint, welcher auf den Boden des Passierbereichs gestellt wird. Anders ausgedrückt erstreckt sich die erste Sensorleiste in ihrem Einbauzustand maximal bis zu einer Höhe von 1300 mm, insbesondere 1200 mm, insbesondere 1100 mm, insbesondere 1000 mm, insbesondere 900 mm, insbesondere 850 mm, insbesondere 800 mm, ausgehend von dem Boden des zu überwachenden Passierbereiches. Insbesondere bildet dabei die Bodenkante den bodenseitigen Abschluss des Passiererkennungssystems. Insbesondere kann es sich bei der Bodenkante um den untersten Punkt eines Aufstellfußes des Passiererkennungssystems handeln.

Ein Bewegungsablauf ist dabei ein Durchschreiten und/oder Passieren des Erfassungsbereichs zumindest der ersten Sensorleiste. Ein Bewegungszustand ist im Rahmen der Erfindung als eine Momentaufnahme des erfassten Passierbereichs durch zumindest die erste Sensorleiste zu verstehen. Ein Bewegungszustand gibt somit anschaulich ausgedrückt an, welche Sensoren an welcher Position etwas, beispielsweise in Form eines neu erkannten Objekts und/oder einer Person in dem jeweiligen Erfassungsbereich zu einem diskreten Zeitpunkt, erkennt. Ein Bewegungsablauf kann insbesondere aus dem zeitlichen Vergleich von mehreren Bewegungszuständen erkannt werden. Insbesondere kann bei Anordnung weiterer Sensorleisten ein einzelner Bewegungszustand ebenfalls die Momentaufnahme der weiteren Sensorleiste zu demselben Zeitpunkt der Momentaufnahme der ersten Sensorleiste umfassen.

Dabei muss der erste Bewegungszustand nicht notwendig der allererste Bewegungszustand des jeweiligen Bewegungsablaufs sein. Maßgeblich ist lediglich, dass der zweite Bewegungszustand chronologisch nach dem ersten Bewegungszustand erfasst wird.

Wenn ein bestimmter Sensor aktiv gemeldet wird und ein anderer Sensor nicht, kann der andere Sensor automatisch als passiv gemeldet werden und umgekehrt. Mit anderen Worten kann die Meldung als Statuszustand des jeweiligen Sensors verstanden werden. Insbesondere kann die Meldung im Rahmen eines Datensatzes, insbesondere 0 oder 1, oder im Rahmen einer anliegenden und/oder nicht anliegenden Spannung in Bezug auf den jeweiligen Sensor erfolgen je nachdem ob der jeweilige Sensor etwas oder nichts erfasst.

Selbstverständlich kann dabei die Übermittlung des durch zumindest die erste Sensorleiste erfassten ersten Bewegungszustands an die Rechnereinheit zeitlich nach der Erfassung des ersten Bewegungszustands erfolgen, wonach dann erst der zweite Bewegungszustand erfasst und nachfolgend an die Rechnereinheit übermittelt wird. Es ist somit nicht zwingend, dass zunächst mehrere Bewegungszustände erfasst werden und erst zeitlich danach an die Rechnereinheit übermittelt werden, sondern es kann jeder einzelne Bewegungszustand erfasst und übermittelt werden. Insbesondere kann dabei ein Bewegungszustand, der gegenüber dem unmittelbar vorangegangenen Bewegungszustand bezüglich der Meldungen der Sensoren nicht abweicht, gefiltert werden. Das heißt ein solcher Bewegungszustand würde in diesem Fall nicht an die Rechnereinheit übermittelt oder nicht von der Rechnereinheit berücksichtigt werden.

Erfindungsgemäß kann das Passiererkennungssystem aufgrund der maximalen Höhe der Sensorleiste halbhoch und muss nicht mannshoch ausgeführt werden. Das Passiererkennungssystem kann somit eine Gesamthöhe entsprechend der maximalen Höhe der Sensorleiste aufweisen. Auf diese Weise kann sich das Passiererkennungssystem maximal bis zu einer Höhe von 1300 mm, bevorzugt 1200 mm, besonders bevorzugt 1100 mm, ganz besonders bevorzugt 1000 mm, insbesondere 900 mm, insbesondere 850 mm, insbesondere 800 mm, ausgehend von der Bodenkante erstrecken. Das Verfahren ermöglicht dabei dennoch eine zuverlässige Erkennung der Bewegungsabläufe. Somit kann insbesondere die Sicht im Bereich von derart ausgeführten Systemen verbessert werden. Ferner ermöglicht es den Designanforderungen gerecht zu werden, welche einen halbhohen Aufbau derartiger Systeme bevorzugen. Hinzu fühlen sich passierende Personen beim Passieren wohler, da sie sich weniger eingeengt fühlen. Ein derart ausgestaltetes erfindungsgemäßes Verfahren ermöglicht vorteilhaft mit hoher Zuverlässigkeit und auch bei geringem Abstand zwischen zwei aufeinander folgenden Personen oder anderen beweglichen Objekten eine Erkennung des jeweiligen Bewegungsablaufs.

Insbesondere kann sich dabei der Erfassungsbereich der ersten Sensorleiste minimal von einer Höhe von 1 mm, insbesondere 5 mm, insbesondere 10 mm, insbesondere 15 mm, insbesondere 20 mm, insbesondere 25 mm, insbesondere 30 mm, und maximal bis zu einer Höhe von 1300 mm, bevorzugt 1200 mm, bevorzugt 1100 mm, bevorzugt 1000 mm, besonders bevorzugt 900 mm, besonders bevorzugt 850 mm, besonders bevorzugt 800 mm, ausgehend von dem Bodenkante des Passiererkennungssystems erstrecken. Insbesondere können dazu die Strahlen der Sensorleiste senkrecht zu dem vertikalen Vektor verlaufen.

Mit der Anordnung der Sensoren entlang eines vertikalen Vektors ist gemeint, dass die Sensoren entlang einer Linie angeordnet sind, wobei die Linie zumindest eine vertikale Komponente aufweist. Bevorzugt sind die Sensoren entlang des vertikalen Vektors angeordnet, wobei die vertikale Komponente des Vektors zumindest 80, insbesondere 90, insbesondere 95, insbesondere 99, Prozent des Vektors ausmacht. Insbesondere können die Sensoren der ersten Sensorleiste auf einer vertikal verlaufenden Ebene oder entlang des vertikalen Vektors versetzt angeordnet sein.

Das Passiererkennungssystems kann dabei weitere Bauteile insbesondere ein Gehäuse, in das die Sensorleiste integriert ist, und/oder einen Identifikationsleser und/oder einen Ticketleser und/oder eine insbesondere mechanisch betriebene, Schleuse und/oder Tür umfassen. Als Gehäuse wird ein Bauteil verstanden, welches eins oder mehrere Elemente des Passiererkennungssystems behausen kann. Das Gehäuse muss aber nicht zwingend nach außen abgeschlossen sein, sondern kann vielmehr zumindest eine oder mehrere Öffnungen und/oder Durchbrüche umfassen.

Besonders bei Durchführung einer Zugangskontrolle kann ein Identifikationsleser und/oder ein Ticketleser angeordnet werden. Insbesondere dabei kann es in der Regel erforderlich sein, den Zugang lediglich für eine einzelne Person, gegebenenfalls mit einem oder mehreren Objekten, bei einer einzelnen erfolgreich durchgeführten Zugangskontrolle zuzulassen und/oder Missbräuche dieser Regel zu dokumentieren.

Alternativ oder kumulativ kann jedoch die Erfindung auch lediglich zur Zählung von den Passierbereich passierenden Personen und/oder Objekten eingesetzt werden.

Die Rechnereinheit kann die Sensoren insbesondere hinsichtlich der Betriebsfrequenz steuern. Die Rechnereinheit kann insbesondere einen Sender zur Übermittlung des wenigstens einen erfassten Bewegungszustandes und/oder einen Empfänger zum Empfang der erfassten Bewegungszustände und/oder eine Auswerteinheit zur Erkennung des Bewegungsablaufs und/oder Bereitstellungseinheit und/oder eine Bereitstellungseinheit und/oder eine Anzeige zur Darstellung des wenigstens einen Bewegungszustandes und/oder des Bewegungsablaufs aufweisen.

Ein einzelner Sensor kann für seine Erfassung wenigstens eine Quelle und wenigstens einen Empfänger aufweisen und/oder seinen Erfassungsbereich mittels Reflexion erfassen. Insbesondere kann ein einzelner Sensor als optischer und/oder optoelektronischer und/oder photoelektrischer Sensor ausgebildet sein. Insbesondere können dabei Kameras als Sensoren, insbesondere Fotokameras und/oder Videokameras, ausgeschlossen werden. Ein einzelner Sensor ist als Lichtschranke und/oder Einweg-Lichtschranke und/oder Reflexions-Lichtschranke und/oder Infrarot-Lichtschranke ausgebildet.

Eine Sensorleiste kann als Einheit aus mehreren zusammen gebauten und/oder zusammen geschalteten Sensoren, insbesondere auf einer Platine, ausgebildet sein. Alternativ kann eine Sensorleiste aus mehreren einzelnen Sensoren, insbesondere mit jeweils eigener Leitung und/oder eigenem Datenkanal, gebildet sein, wobei die einzelnen Sensoren in ihrem Einbauzustand entlang des vertikalen Vektors verlaufen.

Der Abstand zwischen den Sensoren der Sensorleiste kann stets gleich sein oder von Sensor zu Sensor variieren. Zumindest ein Abstand, insbesondere jeder Abstand, zwischen zwei Sensoren kann dabei zwischen 5 mm und 50 mm, insbesondere zwischen 10 mm und 45 mm, insbesondere zwischen 15 mm und 40 mm, insbesondere zwischen 20 mm und 35 mm, insbesondere zwischen 25 mm und 30 mm, betragen.

Insbesondere können die Bewegungszustände mittels eines Buses, insbesondere eines CAN-Buses, übermittelt werden. Insbesondere können die Bewegungszustände seriell und/oder digital und/oder drahtlos an die Rechnereinheit übermittelt werden.

Insbesondere kann die erste Sensorleiste von 2 bis 60, insbesondere von 5 bis 50, insbesondere von 10 bis 40, insbesondere von 15 bis 30, insbesondere 20 bis 25 Sensoren, insbesondere 24 Sensoren, insbesondere 28, Sensoren aufweisen.

Gemäß einer Weiterbildung der vorliegenden Erfindung weist zumindest die erste Sensorleiste zumindest einen, insbesondere mehrere, der oberen Sensoren umfassenden Leistenkopf und einen zumindest einen Sensor, insbesondere mehrere Sensoren, umfassenden Leistenrumpf unterhalb des Leistenkopfs auf.

Der Leistenkopf und/oder der Leistenrumpf kann jeweils als Einheit aus mehreren zusammen gebauten und/oder zusammen geschalteten Sensoren ausgebildet sein. Alternativ kann der Leistenkopf und/oder der Leistenrumpf aus mehreren einzelnen Sensoren, insbesondere mit jeweils eigener Leitung und/oder eigenem Datenkanal, gebildet sein, wobei der Leistenkopf und der Leistenrumpf im Einbauzustand entlang des vertikalen Vektors verlaufen.

Insbesondere kann sich der Leistenkopf minimal von einer Höhe 600 mm, insbesondere 650 mm, insbesondere 700 mm, insbesondere 800 mm, insbesondere 850 mm, insbesondere 900 mm, und/oder maximal bis zu einer Höhe von 1300 mm, insbesondere 1200 mm, insbesondere 1100 mm, insbesondere 1000 mm, insbesondere 900 mm, insbesondere 850 mm, insbesondere 800 mm, ausgehend von der Bodenkante des Passiererkennungssystems erstrecken.

Insbesondere kann der Leistenkopf und/oder der Leistenrumpf jeweils mehrere Sensoren umfassen. Insbesondere kann der Leistenkopf von 2 bis 30, insbesondere von 4 bis 25, insbesondere von 5 bis 20, insbesondere von 10 bis 15, insbesondere 3, Sensoren umfassen. Insbesondere kann der Leistenrumpf von 2 bis 60, insbesondere von 5 bis 50, insbesondere von 10 bis 40, insbesondere von 15 bis 30, insbesondere von 20 bis 25, insbesondere 20, insbesondere 24, Sensoren umfassen.

Bevorzugt umfasst die Erkennung des Bewegungsablaufs eine Richtungserkennung des Bewegungsablaufs und/oder eine Wendungserkennung mit Hilfe einer zweiten zumindest einen Sensor, insbesondere mehrere Sensoren, aufweisenden Sensorleiste, wobei die zweite Sensorleiste neben der ersten Sensorleiste, insbesondere parallel zu der ersten Sensorleiste, angeordnet ist.

Gemeint ist dabei bezüglich des Erfassungsbereichs der Sensoren neben der ersten Sensorleiste. Das bedeutet, dass die Erfassungsbereiche der beiden Sensorleisten nebeneinander liegen. Insbesondere können die beiden Sensorleisten dabei auf einer virtuellen Ebene angeordnet sein. Insbesondere kann die zweite Sensorleiste entlang eines vertikalen Vektors verlaufen.

Die Richtungserkennung kann dadurch erfolgen, dass während eines Bewegungsablaufs in Richtung der ersten Sensorleiste in einem ersten Bewegungszustand die Sensoren, insbesondere eine bestimmte Anzahl an Sensoren, insbesondere alle Sensoren, der zweiten Sensorleiste aktiv und zeitlich danach in einem zweiten Bewegungszustand die Sensoren, insbesondere eine bestimmte Anzahl an Sensoren, insbesondere alle Sensoren des Leistenkopfes, der ersten Sensorleiste aktiv gemeldet werden.

Insbesondere bei einem erfolgenden Durchgang werden in einem weiter darauffolgenden Bewegungszustand zuerst die Sensoren, insbesondere eine bestimmte Anzahl an Sensoren, insbesondere alle Sensoren, der zweiten Sensorleiste passiv gemeldet und danach in einem noch weiter darauffolgenden Bewegungszustand die Sensoren, insbesondere eine bestimmte Anzahl an Sensoren, insbesondere alle Sensoren des Leistenkopfes, der ersten Sensorleiste passiv gemeldet werden.Anders als bei einem Durchgang werden bei einer Wendung innerhalb der Erfassungsbereichs der Sensorleisten, was einem Abbruch des Durchgangs entspricht, in dem weiter darauffolgenden Bewegungszustand zuerst die Sensoren, insbesondere eine bestimmte Anzahl an Sensoren, insbesondere alle Sensoren des Leistenkopfes der ersten Sensorleiste passiv gemeldet und danach in dem noch weiter darauf folgenden Bewegungszustand die Sensoren, insbesondere eine bestimmte Anzahl an Sensoren, insbesondere alle Sensoren, der zweiten Sensorleiste passiv gemeldet werden.

Dies gilt bei einem Bewegungsablauf in Richtung der zweiten Sensorleiste jeweils umgekehrt.

Somit kann die Richtung und/oder die Wendung des Bewegungsablaufs zuverlässig erkannt werden. Daher kann das Passiererkennungssystem in beide Richtungen passierbar ausgeführt werden.

Insbesondere kann die zweite Sensorleiste von 2 bis 30, insbesondere 3 bis 25, insbesondere 4 bis 20, insbesondere 5 bis 15, insbesondere 8 bis 10, Sensoren aufweisen. Insbesondere kann die zweite Sensorleiste ebenfalls entlang eines vertikalen Vektors verlaufen, dessen vertikale Komponente von 80 bis 100, insbesondere von 90 bis 95, Prozent des Vektors ausmacht.

Insbesondere kann sich die zweite Sensorleiste minimal von einer Höhe von 5 mm, insbesondere 10 mm, insbesondere 100 mm, insbesondere 400 mm, insbesondere 800 mm und/oder maximal bis zu einer Höhe der ersten Sensorleiste ausgehend von der Bodenkannte erstrecken. Bevorzugt kann sich die zweite Sensorleiste zumindest über die Höhe des Sensorkopfs der ersten Sensorleiste erstrecken.

Die zuvor beschriebenen Möglichkeiten der Ausführung einer Sensorleiste sowie der einzelnen Sensoren davon, insbesondere bezüglich der Erfassung und/oder der Bauweise und/oder des Abstandes und/oder der Übermittlung der Bewegungszustände, gelten für die zweite Sensorleiste entsprechend.

Vorzugsweise umfasst die Erfassung des zumindest einen Bewegungszustandes eine Ermittlung einer Anzahl an aktiv gemeldeten und/oder an passiv gemeldeten Sensoren, insbesondere innerhalb der ersten Sensorleiste, insbesondere innerhalb des Leistenkopfes und/oder des Leistenrumpfes der ersten Sensorleiste, und/oder innerhalb der zweiten Sensorleiste. Eine derartige Ermittlung stellt für die zuverlässige Erkennung des Bewegungsablaufs eine nützliche Information dar. Insbesondere kann eine derartige Erfassung innerhalb eines jeden Bewegungszustandes erfolgen.

Bevorzugt wird der Bewegungsablauf zumindest einer Person und/oder zumindest einem Objekt zugeordnet. Dadurch wird eine Zählung von passierenden Personen und/oder Objekten ermöglicht. Als Objekt wird ein Gegenstand verstanden.

Vorzugsweise wird der Bewegungsablauf zumindest einer Person zugeordnet, wenn innerhalb des ersten Bewegungszustands alle Sensoren des Leistenkopfes der ersten Sensorleiste und/oder alle Sensoren der zweiten Sensorleiste aktiv gemeldet werden. Hierbei wird angenommen, dass lediglich eine Person innerhalb eines einzelnen Bewegungszustandes alle Sensoren in der Höhe des Leistenkopfes und/oder der zweiten Sensorleiste aktiv melden kann.

Bevorzugt wird der Bewegungsablauf zumindest einer Person zugeordnet, wenn innerhalb des Bewegungsablaufs jeder einzelne Sensor der ersten Sensorleiste oder jeder einzelne Sensor des Leistenrumpfs der ersten Sensorleiste zumindest einmal aktiv gemeldet wird. Hierdurch wird eine zuverlässige Personenerkennung bereitgestellt.

Damit ist gemeint, dass in allen Bewegungszuständen des einzelnen Bewegungsablaufs jeder einzelne Sensor der ersten Sensorleiste oder jeder einzelne Sensor des Leistenrumpfs zumindest einmal aktiv gemeldet wird, wobei es unbeachtlich ist, wann dies im Zeitverlauf des Bewegungsablaufs erfolgt ist.

Dabei wird angenommen, dass eine Person innerhalb ihres Bewegungsablaufs zumindest einmal eine Aktivmeldung jedes einzelnen Sensors bewirkt. Dabei muss dies nicht innerhalb eines einzelnen Bewegungszustandes geschehen, sondern innerhalb eines einzelnen Bewegungsablaufs mit allen seinen Bewegungszuständen darin.

Insbesondere kann der Bewegungsablauf zumindest einer Person zugeordnet werden, wenn innerhalb eines einzelnen Bewegungszustands jeder einzelne Sensor der ersten Sensorleiste oder jeder einzelne Sensor des Leistenrumpfs aktiv gemeldet wird.

Insbesondere kann der Bewegungsablauf zumindest einer Person zugeordnet werden, wenn innerhalb des ersten Bewegungszustandes zumindest der oberste Sensor der ersten Sensorleiste und/oder der oberste Sensor des Leistenrumpfes und innerhalb des zweiten Bewegungszustandes zumindest der unterste Sensor der Sensorleiste und/oder der unterste Sensor des Leistenrumpfes aktiv gemeldet wird, wobei innerhalb des einzelnen Bewegungsablaufs jeder einzelne Sensor der ersten Sensorleiste oder jeder einzelne Sensor des Leistenrumpfs zumindest einmal aktiv gemeldet wird.

Insbesondere kann der Bewegungsablauf zumindest einer Person zugeordnet werden, wenn innerhalb des ersten Bewegungszustandes zumindest der unterste Sensor der ersten Sensorleiste und/oder der unterste Sensor des Leistenrumpfes und innerhalb des zweiten Bewegungszustandes zumindest der oberste Sensor der Sensorleiste und/oder der oberste Sensor des Leistenrumpfes aktiv gemeldet wird, wobei innerhalb des Bewegungsablaufs jeder einzelne Sensor der ersten Sensorleiste oder jeder einzelne Sensor des Leistenrumpfs zumindest einmal aktiv gemeldet wird.

Vorzugsweise wird der Bewegungsablauf zumindest einer Person zugeordnet, wenn bezüglich der Anzahl an von der ersten Sensorleiste, insbesondere von dem Leistenrumpf der ersten Sensorleiste, aktiv gemeldeten Sensoren innerhalb eines einzelnen Bewegungszustandes zumindest einmal eine positive Differenz und/oder zumindest einmal eine negative Differenz zwischen den Bewegungszuständen, insbesondere zwischen zeitlich mittelbar oder unmittelbar aufeinander folgenden Bewegungszuständen, innerhalb des Bewegungsablaufs ermittelt wird.

Hierbei wird angenommen, dass eine Person innerhalb des Bewegungsablaufs zumindest einmal eine im zeitlich fortlaufenden Verlauf ansteigende und/oder zumindest einmal eine im zeitlich fortlaufenden Verlauf sinkende Anzahl von aktiven Sensoren der ersten Sensorleiste, insbesondere des Leistenrumpfs der ersten Sensorleiste bewirkt. Dies ermöglicht eine zuverlässige Erkennung eines typischen Schrittes einer Person.

Hingegen bewirkt ein stehend geführter Trolleykoffer üblicherweise eine im Zeitverlauf konstante Anzahl an aktiven Sensoren. Auf diese Weise können stehend geführte Trolleys zuverlässig gerade nicht als Personen erkannt werden.

Bevorzugt umfasst die Erkennung des Bewegungsablaufs eine Abgrenzung des Bewegungsablaufs von einem weiteren Bewegungsablauf auf Grundlage eines Trennungskriteriums. Dies ermöglicht eine passierende Person und/oder ein passierendes Objekt von einer nächsten Person und/oder von einem nächsten Objekt zu unterscheiden und so die Personen und/oder Objekte zu zählen.

Vorzugsweise umfasst die Erkennung des Bewegungsablaufs eine Abgrenzung des Bewegungsablaufs von einem weiteren Bewegungsablauf auf Grundlage eines Trennungskriteriums, wobei das Trennungskriterium eingreift, wenn eine bestimmte Differenz zwischen der Anzahl der aktiv gemeldeten Sensoren der ersten Sensorleiste, insbesondere des Leistenkopfes, insbesondere des Leistenrumpfs, innerhalb des ersten Bewegungszustands und der Anzahl der aktiv gemeldeten Sensoren der ersten Sensorleiste, insbesondere des Leistenkopfes, insbesondere des Leistenrumpfs, innerhalb des zweiten Bewegungszustands ermittelt wird.

Unter Eingreifen des Trennungskriteriums wird eine Abgrenzung eines Bewegungsablaufs von einem anderen Bewegungsablauf verstanden. Insbesondere kann dabei der zweite Bewegungszustand bereits als zumindest einer der Bewegungszustände des weiteren Bewegungsablaufs herangezogen werden.

Insbesondere kann das Trennungskriterium bei einer Differenz von zumindest zwei bis zwanzig, insbesondere drei bis fünfzehn, insbesondere vier bis zwölf, insbesondere fünf bis zehn, aktiven Sensoren eingreifen.

Bevorzugt umfasst die Erkennung des Bewegungsablaufs eine Unterteilung des Bewegungsablaufs von einem weiteren Bewegungsablauf auf Grundlage eines Trennungskriteriums, wobei das Trennungskriterium eingreift, wenn innerhalb eines einzelnen Bewegungszustands eine bestimmte Differenz zwischen der Anzahl der aktiv gemeldeten Sensoren der ersten Sensorleiste, insbesondere des Leistenkopfes und der Anzahl der aktiv gemeldeten Sensoren der zweiten Sensorleiste ermittelt wird.

Insbesondere kann das Trennungskriterium bei einer Differenz von zumindest zwei bis zehn, insbesondere drei, insbesondere vier, insbesondere fünf, aktiven Sensoren eingreifen.

Ein derartiges Trennungskriterium ermöglicht eine zuverlässige Trennung zwischen Bewegungsabläufen von einzelnen Personen oder Objekten. Insbesondere ermöglicht es eine zuverlässige Personenvereinzelung auch bei dicht aufeinander folgenden Personen.

Alternativ oder kumulativ kann die Erkennung des Bewegungsablaufs eine Abgrenzung des Bewegungsablaufs von einem weiteren Bewegungsablauf auf Grundlage eines Trennungskriteriums umfassen, wobei das Trennungskriterium eingreift, wenn innerhalb des ersten Bewegungszustands zumindest einer der Sensoren, insbesondere eine bestimmte Anzahl der Sensoren, insbesondere alle Sensoren, des Leistenkopfes und/oder des Leistenrumpfs aktiv gemeldet wird, wobei innerhalb des zweiten Bewegungszustands zumindest einer der Sensoren, insbesondere eine bestimmte Anzahl der Sensoren, insbesondere alle Sensoren, des Leistenkopfes und/oder des Leistenrumpfs passiv gemeldet wird.

Insbesondere kann der erste Bewegungszustand gefiltert werden, wenn der erste Bewegungszustand eine Anzahl bis zu drei, bevorzugt zwei, besonders bevorzugt einem, aktiv gemeldeten Sensoren der Sensorleiste, insbesondere der ersten Sensorleiste, insbesondere innerhalb des Leistenrumpfes aufweist und in einem oder mehreren jeweils unmittelbar darauf folgenden Bewegungszuständen diese Anzahl an aktiv gemeldeten Sensoren um weniger als drei, insbesondere zwei, steigt. Eine derartige Filterung reduziert die Datenflussmenge.

Das heißt ein solcher Bewegungszustand wird nicht für die Erkennung eines Bewegungsablaufs herangezogen. Solche Bewegungszustände werden bspw. von schmalen Gegenständen wie Taschenriemen oder schräg gehaltenen Teleskoprohren von Trolleys verursacht und können bei dem Verfahren vernachlässigt werden.

Alternativ oder kumulativ können einzelne Bewegungszustände, die sich gegenüber dem unmittelbar darauffolgenden Zeitpunkt nicht ändern gefiltert werden.

Gemäß einem weiteren Aspekt der Erfindung wird das erfindungsgemäße Verfahren computerimplementiert ausgeführt, wobei der Computer von der Rechnereinheit und/oder von einem zusätzlichen Computer gebildet wird.

Insbesondere kann dazu ein Computerprogramm auf einem Datenträger zur Durchführung des Verfahrens eingesetzt werden. Insbesondere kann dabei zumindest ein Schritt, insbesondere mehrere, insbesondere alle Schritte des Verfahrens mittels eines auf dem Computer laufenden Algorithmus ausgeführt werden.

Gemäß der Erfindung wird ein Passiererkennungssystem zur Ausführung des beschriebenen Verfahrens nach einem bereitgestellt, umfassend eine Bodenkante, insbesondere zur Aufstellung auf einen Boden eines zu überwachenden Passierbereichs, wenigstens eine entlang eines vertikalen Vektors verlaufende und mehrere Sensoren aufweisende erste Sensorleiste, eine Rechnereinheit, wobei sich die Sensorleiste in ihrem Einbauzustand maximal bis zu einer Höhe von 1300 mm, insbesondere 1200 mm, insbesondere 1100 mm, insbesondere 1000 mm, besonders bevorzugt 900 mm, besonders bevorzugt 850 mm, besonders bevorzugt 800 mm, ausgehend von der Bodenkante des Passiererkennungssystems erstreckt.

Die bezüglich des Verfahrens beschriebenen Möglichkeiten der Ausführung gelten für das Passiererkennungssystem entsprechend.

Derartige Passiererkennungssysteme können beispielsweise bei eine Flughafenkontrolle oder im Office-kontrollbereich eingesetzt werden.

Bevorzugt umfasst das Passiererkennungssystem eine zweite zumindest einen Sensor, insbesondere mehrere Sensoren aufweisende Sensorleiste, wobei die zweite Sensorleiste neben der ersten Sensorleiste, insbesondere parallel zu der ersten Sensorleiste, angeordnet ist, wobei die zweite Sensorleiste weniger Sensoren als die erste Sensorleiste aufweist und/oder wobei die zweite Sensorleiste kürzer als die erste Sensorleiste ausgebildet ist und/oder wobei die zweite Sensorleiste sich über die Höhe des Leistenkopfs der ersten Sensorleiste erstreckt. Mit der Höhe des Leistenkopfs ist die Höhe des Leistenkopfs in seinem Einbauzustand ausgehend von der Bodenkante gemeint.

Bevorzugt ist eine, insbesondere unterhalb der ersten Sensorleiste, entlang eines horizontalen Vektors verlaufende dritte Sensorleiste mit zumindest einem Sensor, insbesondere zumindest zwei Sensoren, angeordnet.

Mit der Anordnung der Sensoren entlang des horizontalen Vektors ist gemeint, dass die Sensoren entlang einer Linie angeordnet sind, wobei die Linie zumindest eine horizontale Komponente aufweist. Bevorzugt sind die Sensoren entlang des horizontalen Vektors angeordnet, wobei die horizontale Komponente zumindest von 80 bis 99, insbesondere von 85 bis 95, Prozent des Vektors ausmacht. Insbesondere können die Sensoren der ersten Sensorleiste auf einer vertikal verlaufenden Ebene oder entlang des horizontalen Vektors versetzt angeordnet sein.

Insbesondere kann sich die dritte Sensorleiste in einer Höhe von 3 bis 250 mm, insbesondere von 5 bis 200 mm, insbesondere von 15 bis 165 mm, insbesondere von 25 bis 150 mm, insbesondere von 30 bis 100 mm, insbesondere von 40 bis 50 mm, ausgehend von der Bodenkante des Passiererkennungssystems und/oder ausgehend von dem Boden des Passierbereichs angeordnet sein. Insbesondere kann die dritte Sensorleiste von 2 bis 50, von 3 bis 40, von 5 bis 30, von 10 bis 21, Sensoren umfassen.

Insbesondere kann mittels der dritten Sensorleiste eine Personenfußerkennung erfolgen. Insbesondere kann die Erkennung des Bewegungsablaufs eine Personenfußerkennung umfassen, wobei der Bewegungsablauf einem Personenfuß zugeordnet wird, wenn in einem bestimmten diskreten Zeitpunkt eine bestimmte Anzahl, insbesondere der unteren Sensoren, des Leistenrumpfs der ersten Sensorleiste aktiv gemeldet werden und gleichzeitig zumindest der eine Sensor, insbesondere die zumindest zwei Sensoren, der dritten Sensorleiste aktiv gemeldet werden, wobei der zumindest eine Sensor der dritten Sensorleiste in Richtung des Bewegungsablaufs hinter der ersten Sensorleiste angeordnet ist.

Insbesondere kann sich dabei die erste Sensorleiste in ihrem Einbauzustand maximal bis zu einer Höhe von 600 mm, bevorzugt 500 mm, besonders bevorzugt 400 mm, ganz besonders bevorzugt 300 mm, ausgehend von der Bodenkante des Passiererkennungssystems erstrecken. Auch bei derart niedriger Ausführung der ersten Sensorleiste können zur Personenfußerkennung dennoch die Bewegungszustände ausreichen, da hierfür lediglich der untere Bereich des Personenbeins ausschlaggebend ist.

Insbesondere kann der Bewegungsablauf einer Person zugeordnet werden, wenn der Bewegungsablauf einem Personenfuß zugeordnet wird.

Mittels der dritten Sensorleiste kann alternativ oder kumulativ zu der zweiten Sensorleiste eine Richtungserkennung des Bewegungsablaufs erfolgen.

Insbesondere kann dabei die Erkennung der Bewegungsrichtung des Bewegungsablaufs derart erfolgen, dass zumindest ein erster Sensor der dritten Sensorleiste und ein zweiter Sensor der dritten Sensorleiste in Bewegungsrichtung neben dem ersten Sensor angeordnet sind und innerhalb des Bewegungsablaufs aktiv gemeldet werden, wobei der zweite Sensor zu einem späteren Zeitpunkt als der erste Sensor aktiv gemeldet wird.

Die zuvor beschriebenen Möglichkeiten der Ausführung einer Sensorleiste sowie der einzelnen Sensoren davon, insbesondere bezüglich der Erfassung und/oder der Bauweise und/oder des Abstandes und/oder der Übermittlung der Bewegungszustände, gelten für die dritte Sensorleiste entsprechend.

Insbesondere kann das Passiererkennungssystem zumindest eine mechanische Sperre zur Sperrung des Passierbereichs aufweisen.

Insbesondere bei Anordnung einer mechanischen Sperre kann sich die dritte Sensorleiste dabei über einen Passierbereich örtlich vor und/oder nach der Sperre erstrecken. Auf diese Weise kann zuverlässig festgestellt werden, ob eine Person und/oder ein Objekt die Sperre tatsächlich passiert hat.

Insbesondere können die Bewegungszustände mittels einer Umwandlungseinheit vor und/oder nach der Übermittlung an die Rechnereinheit umgewandelt werden.

Insbesondere können die Bewegungszustände mittels einer Anzeige der Rechnereinheit und/oder einer zusätzlichen Anzeige des Passiererkennungssystems dargestellt werden.

Insbesondere kann das Passiererkennungssystem eine Vorrichtung, insbesondere eine Kamera, zur biometrischen Erkennung, insbesondere Gesichtserkennung umfassen.

Insbesondere kann das Passiererkennungssystem zumindest einen Kopfsensor zur Erfassung eines Erfassungsbereichs aufweisen, wobei der Erfassungsbereich des Kopfsensors oberhalb eines Gehäuses des Passiererkennungssystems liegt. Anders ausgedrückt ist der Kopfsensor derart ausgebildet und/oder angeordnet, dass er seinen Erfassungsbereich oberhalb des höchsten Punktes eines Gehäuses von dem Passiererkennungssystem ausgehend von der Bodenkante des Passiererkennungssystems erfasst. Damit ist gemeint, dass der Erfassungsbereich des Kopfsensors oberhalb einer virtuellen horizontalen Ebene liegt, wobei die Ebene den höchsten Punkt des Gehäuses umfasst. Dadurch wird ermöglicht, mittels eines Passiererkennungssystems mit geringer Höhe, Bewegungsdaten oberhalb zumindest des Gehäuses zu erfassen. Dadurch kann die Erkennung des Bewegungsablaufs weiter verbessert werden.

Insbesondere kann das Gehäuse dabei als Leitelement, insbesondere zur Durchleitung einer Person durch den Passierbereich, ausgebildet sein. Insbesondere kann das Gehäuse nach oben durch einen Handlauf als Gehäuseoberteil begrenzt sein, insbesondere wobei der Kopfsensor in oder an dem Handlauf angeordnet sein kann.

Insbesondere kann der Erfassungsbereich des Kopfsensors in einer Höhe zwischen 1000 mm bis 2200 mm, insbesondere 1100 mm bis 2100 mm, insbesondere 1150 mm bis 2000 mm, insbesondere 1200 mm bis 1900 mm, insbesondere 1250 mm bis 1800 mm, insbesondere 1300 mm bis 1700 mm, insbesondere 1350 mm bis 1600 mm, insbesondere 1400 mm bis 1500 mm, ausgehend von der Bodenkante des Passiererkennungssystems liegen. Insbesondere kann die Erfassungsrichtung des Kopfsensors schräg nach oben ausgerichtet sein.

Insbesondere kann der Kopfsensor seinen Erfassungsbereich durch einen für den Kopfsensor transparenten Bereich des Gehäuses hindurch erfassen. Insbesondere können mehrere Kopfsensoren angeordnet werden. Insbesondere können die Kopfsensoren entlang eines horizontalen Vektors, insbesondere nebeneinander, und/oder entlang eines vertikalen Vektors, insbesondere übereinander, angeordnet werden.

Die zuvor beschriebenen Möglichkeiten der Ausführung eines Sensors insbesondere bezüglich der Erfassung und/oder der Bauweise und/oder der Übermittlung der Bewegungszustände, gelten für den Kopfsensor entsprechend. Insbesondere kann der Kopfsensor als Reflexionssensor ausgeführt sein. Als Reflexionssensor erfasst der Kopfsensor seinen Erfassungsbereich mittels Reflexion. Somit braucht ein derartiger Sensor keine zweiteilige Ausführung aus Sender und Empfänger, sondern kann einteilig ausgeführt werden. Insbesondere kann der Kopfsensor seine Meldung digital oder seriell generieren und/oder übermitteln. Insbesondere kann der Kopfsensor optoelektrisch ausgeführt sein. Insbesondere kann der Kopfsensor als Infrarotsensor ausgebildet sein.

Insbesondere kann der Bewegungsablauf einer Person zugeordnet werden, wenn der Kopfsensor zumindest einmal, insbesondere mehrmals, innerhalb des Bewegungsablaufs aktiv gemeldet wird. Dabei wird angenommen, dass lediglich eine Person eine Aktivmeldung des Kopfsensors bewirkt.

Insbesondere kann das Passiererkennungssystem zumindest ein erstes Gehäuse umfassen, wobei in und/oder an dem ersten Gehäuse eins oder mehrere Elemente des Passiererkennungssystems, insbesondere die erste Sensorleiste und/oder die zweite Sensorleiste und/oder die dritte Sensorleiste und/oder der Kopfsensor und/oder ein Scanner, angeordnet sind. Insbesondere kann das Passiererkennungssystem zumindest ein zweites Gehäuse umfassen, wobei in und/oder an dem zweiten Gehäuse eins oder mehrere Elemente des Passiererkennungssystems, insbesondere der Kopfsensor, angeordnet sind.

Weitere Einzelheiten und Vorteile der Erfindung sollen nachfolgend anhand der in den Figuren teilweise schematisch gezeigten Ausführungsbeispiele erläutert werden. Elemente mit gleicher Funktion und Wirkungsweise sind jeweils mit denselben Bezugszeichen versehen. Es zeigen:
- Fig. 1: ein Flussdiagramm einer Ausführungsform eines erfindungsgemäßen Verfahrens;
- Fig. 2: eine Seitenansicht einer ersten Ausführungsform eines erfindungsgemäßen Passiererkennungssystems mit zwei Sensorleisten;
- Fig. 3a: eine erste Darstellung eines Bewegungsablaufs auf Grundlage von einer Vielzahl von erfassten Bewegungszuständen;
- Fig. 3b: eine zweite Darstellung eines Bewegungsablaufs auf Grundlage von einer Vielzahl von erfassten Bewegungszuständen;
- Fig. 4a: eine Darstellung einer Richtungserkennung;
- Fig. 4b: eine Darstellung einer Wendungserkennung;
- Fig. 5: eine dritte Darstellung auf Grundlage von einer Vielzahl von erfassten Bewegungszuständen;
- Fig. 6: eine vierte Darstellung eines Bewegungsablaufs auf Grundlage von einer Vielzahl von erfassten Bewegungszuständen;
- Fig. 7: eine Ansicht einer zweiten Ausführungsform eines erfindungsgemäßen Passiererkennungssystems.

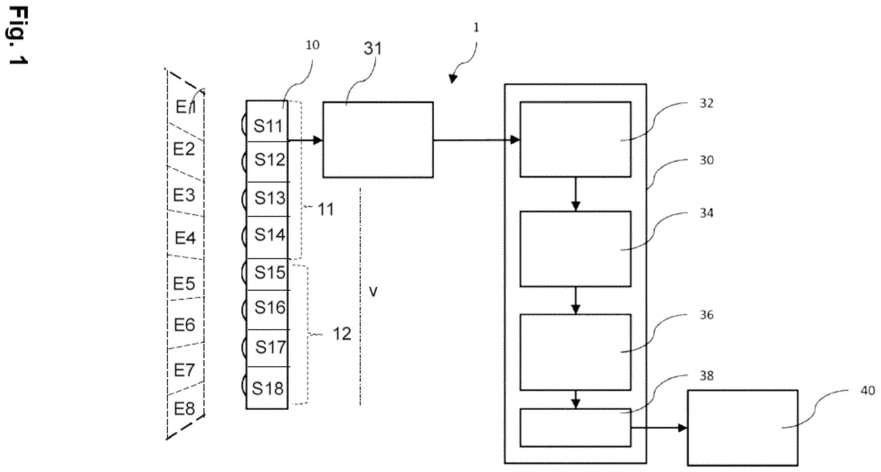

Die Fig. 1 zeigt ein Flussdiagramm eines erfindungsgemäßen Verfahrens mit einem Passiererkennungssystem 1 umfassend eine erste Sensorleiste 10 mit den Sensoren S11 bis S18 zum Erfassen von Bewegungszuständen innerhalb eines Erfassungsbereichs E1 bis E8, einen Sender 31 zur Übermittlung der Bewegungszustände, eine Rechnereinheit 30 mit einem Empfänger 32 zum Empfang der Bewegungszustände, mit einer Auswerteinheit 34 zur Auswertung der Bewegungszustände, mit einer Bereitstellungseinheit 36 zur Bereitstellung der Bewegungszustände 2, mit einer Umwandlungseinheit 38 zur Umwandlung der Bewegungszustände 2 und mit einer Anzeige eines erkannten Bewegungsablaufs.

Die erste Sensorleiste 10 verläuft dabei entlang des vertikalen Vektors v, wobei seine vertikale Komponente 100 Prozent beträgt. Die erste Sensorleiste 10 ist in einen Leistenkopf 11 mit den oberen vier Sensoren S11 - S14 und in einen beispielhaften Leistenrumpf 12 mit den unteren vier Sensoren S15 - S18 unterteilt.

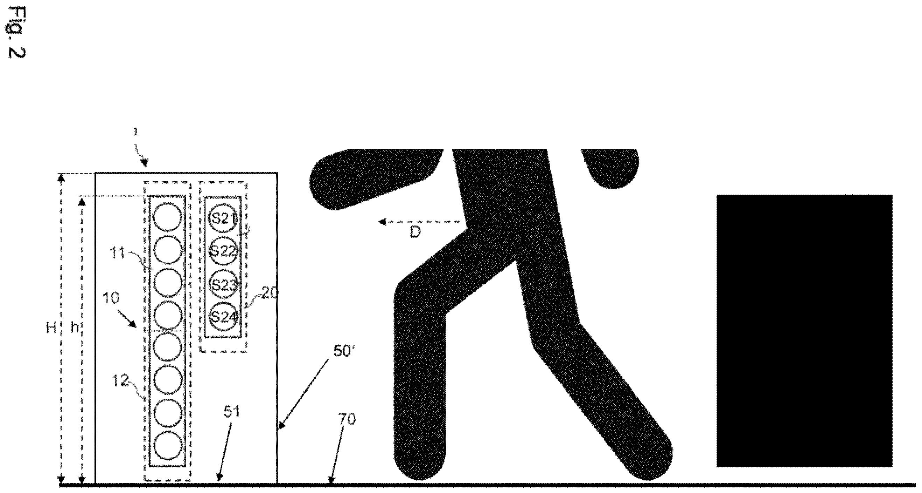

In Fig. 2 ist eine Seitenansicht einer Ausführungsform eines ersten erfindungsgemäßen Passiererkennungssystems 1 mit der ersten Sensorleiste 10 und einer neben und parallel zu der ersten Sensorleiste 10 angeordneten zweiten Sensorleiste 20 mit ihren Sensoren S21 - S24, mit einer Bodenkante 51 und einem Gehäuse 50' gezeigt. Die Bodenkante 51 ist auf den Boden 70 des Passierbereichs gestellt. Die erste Sensorleiste 10 erstreckt sich bis zu einer Höhe h ausgehend von der Bodenkante 51. Die erste Sensorleiste 10 erstreckt sich gleichzeitig bis zu einer Höhe h ausgehend von dem Boden 70 des Passierbereichs. Ferner ist eine Person und ein stehend geführter Koffer dargestellt, welche sich in Richtung D bewegen. Die Anzahl an Sensoren, die Länge sowie die Einbauhöhe der zweiten Sensorleiste 20 entsprechen dem Leistenkopf 11 der ersten Sensorleiste 10. Das Gehäuse 50' weist eine Gesamthöhe H auf.

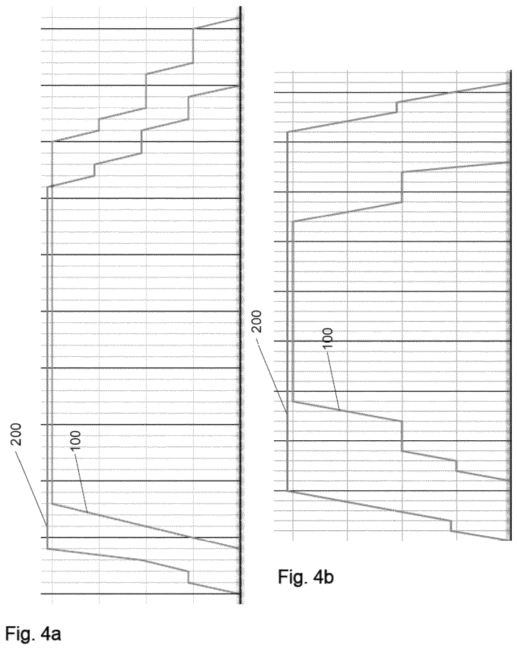

Die zweite Sensorleiste 10 dient einer bespielhaften ergänzenden Erfassung von Bewegungszuständen 2, um eine Auswertung der Richtung der erkannten Bewegungsabläufe 4 durch die Rechnereinheit 30 zu ermöglichen. Dies wird anhand der Fig. 4a und Fig. 4b näher erläutert.

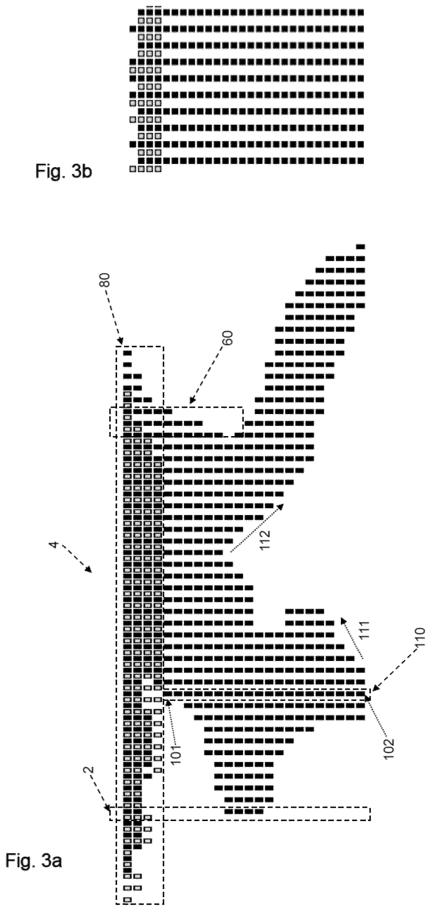

Die Fig. 3a zeigt eine Vielzahl von Bewegungszuständen 2 einer Person, die gemäß Fig. 2 das Passiererkennungssystem 1 passiert. Schwarz ausgefüllte Quadrate stehen für aktiv gemeldete Sensoren der ersten Sensorleiste 10 mit hier abweichend von Fig. 2 insgesamt 24 Sensoren. Nicht oder grau ausgefüllte Quadrate stehen für aktiv gemeldete Sensoren der zweiten Sensorleiste 20 mit insgesamt vier Sensoren. Die leeren Stellen stehen für passiv gemeldete Sensoren der ersten Sensorleiste 10 und der zweiten Sensorleiste 20. Jede Spalte repräsentiert einen erfassten Bewegungszustand 2. Die Vielzahl an Spalten ergebt sich aus einem zeitlichen Verlauf der erfassten Bewegungszustände 2, jeweils von der ersten Sensorleiste 10 und von der zweiten Sensorleiste 20 erfasst, chronologisch von links nach rechts. Jede Zeile stellt die Erfassung jeweils eines Sensors der Sensorleisten 10, 20 im Zeitverlauf von links nach rechts dar. Die oberen vier Zeilen 80 zeigen somit jeweils die erfassten Bewegungszustände 2 der Sensoren von dem Leistenkopf 11 der ersten Sensorleiste 10 und von der zweiten Sensorleiste 20. Die unteren 20 Zeilen zeigen jeweils die erfassten Bewegungszustände 2 der Sensoren von dem Leistenrumpf 12 der ersten Sensorleiste 10, wobei der Leistenrumpf 12 abweichend von Fig. 2 zwanzig Sensoren aufweist.

In einem Bewegungszustand 110 werden alle Sensoren des Leistenrumpfs zumindest einmal aktiv gemeldet, wobei ferner sowohl der oberste Sensor in 101 als auch der unterste Sensor in 102 aktiv gemeldet wird. Ferner wird nachfolgend eine positive Differenz zwischen den Bewegungszuständen im Zeitverlauf innerhalb des Bewegungsablaufs 4 also eine Senkung einer Anzahl an aktiven Sensoren des Leistenrumpfes 12 ermittelt, was durch den Pfeil 111 angedeutet ist. Hinzu wird nachfolgend eine negative Differenz zwischen den Bewegungszuständen also eine Steigerung der Anzahl an aktiven Sensoren des Leistenrumpfes 12 im Zeitverlauf innerhalb des Bewegungsablaufs 4 ermittelt, was durch den Pfeil 112 angedeutet ist. Außerdem wird zeitlich vor dem Bewegungszustand 110 bereits eine Steigerung an aktiven Sensoren des Leistenrumpfs 12 ermittelt. Dies führt dazu, dass der Bewegungsablauf 4 einer Person zugeordnet wird.

In einem Bereich 60 ist ferner dargestellt, wann ein Trennkriterium gemäß dem erfindungsgemäßen Verfahren eingreift und somit einen Bewegungsablauf 4 von einem weiteren Bewegungsablauf abgrenzt. Im Bereich 60 sind sowohl einzelne Sensoren des Leistenkopfes 11 sowie der zweiten Sensorleiste 20 als auch einzelne Sensoren des Leistenrumpfs 12 passiv gemeldet. Dies führt zum Eingreifen des Trennkriteriums und der Bewegungsablauf 4 gilt daher als abgeschlossen.

Anders als in Fig. 3a sind in Fig. 3b Bewegungszustände eines stehend geführten Koffers nach Fig. 2, rechte Seite, dargestellt. Hier werden abweichend von Fig. 3a keine Differenzen der Anzahl an aktiv gemeldeten Sensoren im Leistenrumpf 12 zwischen den Bewegungszuständen innerhalb des Bewegungsablaufs im Zeitverlauf ermittelt. Daher wird dieser Bewegungsablauf nicht einer Person, sondern bspw. einem Objekt zugeordnet.

Mittels des erfindungsgemäßen Verfahrens und des erfindungsgemäßen Passiererkennungssystems ist somit eine zuverlässige Erkennung von Personen bei gleichzeitig niedriger Ausführung des Passiererkennungssystems 1 möglich.

In Fig. 4a ist der zeitliche Verlauf der Anzahl an aktiven Sensoren der oberen vier Zeilen 80 nach Fig. 3a dargestellt. Der Verlauf 100 entspricht dem Leistenkopf 11 der ersten Sensorleiste 10 und der Verlauf 200 entspricht der zweiten Sensorleiste 20. Im ersten Schritt werden zunächst alle vier Sensoren der zweiten Sensorleiste 20 aktiv gemeldet und zeitlich danach alle vier Sensoren des Leistenkopfes 11. Im zweiten Schritt werden zunächst alle Sensoren der zweiten Sensorleiste 20 passiv und zeitlich danach alle Sensoren des Leistenkopfes 11 der ersten Sensorleiste 10. Dies führt dazu, dass die Richtung D des Bewegungsablaufs wie in Fig. 2 dargestellt von rechts nach links erkannt wird.

Im Unterschied dazu ist in Fig. 4b eine Wendung des Bewegungsablaufs dargestellt, wobei anders als zuvor beschrieben im zweiten Schritt zunächst alle Sensoren des Leistenkopfes 11 der ersten Sensorleiste 10 und zeitlich danach alle Sensoren der zweiten Sensorleiste 20 passiv gemeldet werden. Dies führt dazu, dass eine Wendung des Bewegungsablaufs erkannt wird.

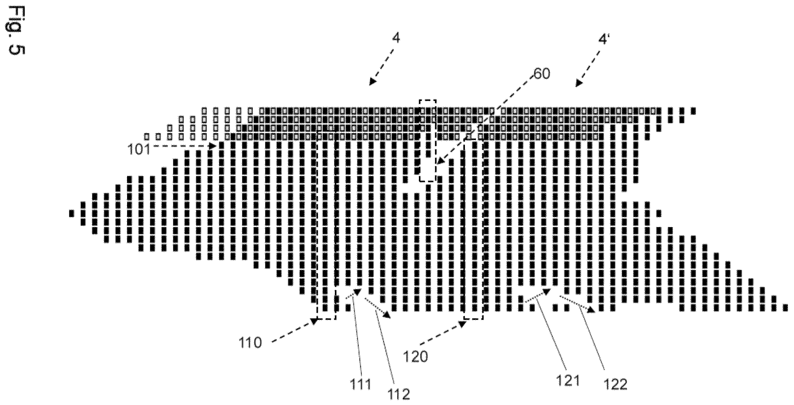

Die Fig. 5 zeigt eine Vielzahl von Bewegungszuständen 2 einer Person und einer weiteren dicht aufeinander folgenden Person. Die Zuordnung des Bewegungsablaufs 4 als Person erfolgt im Wesentlichen analog zur Fig. 3a. Alle aktiv gemeldeten Sensoren des Leistenrumpfs 12 in 110, die Senkung der Anzahl an aktiven Sensoren des Leistenrumpfs 12 gemäß Pfeil 111 sowie die Steigerung der Anzahl an aktiven Sensoren des Leistenrumpfs 12 gemäß Pfeil 112 führen hier zu der Zuordnung des Bewegungsablaufs 4 als Person. Im Bereich 60 sind sowohl einzelne Sensoren des Leistenkopfes 11 sowie der zweiten Sensorleiste 20 als auch einzelne Sensoren des Leistenrumpfs 12 passiv gemeldet. Dies führt zum Eingreifen des Trennkriteriums und der Bewegungsablauf 4 gilt daher als abgeschlossen, wobei gleichzeitig der nächste Bewegungsablauf 4' beginnt. Alle aktiv gemeldeten Sensoren des Leistenrumpfs 12 in 120, die Senkung der Anzahl an aktiven Sensoren des Leistenrumpfs 12 gemäß Pfeil 121 sowie die Steigerung der Anzahl an aktiven Sensoren des Leistenrumpfs 12 gemäß Pfeil 122 führen hier zu der Zuordnung des Bewegungsablaufs 4' als Person.

Mittels des erfindungsgemäßen Verfahrens und des erfindungsgemäßen Passiererkennungssystems ist somit eine zuverlässige Erkennung von einzelnen Personen bei gleichzeitig niedriger Ausführung des Passiererkennungssystems 1 und bei dicht aufeinander folgenden Personen möglich.

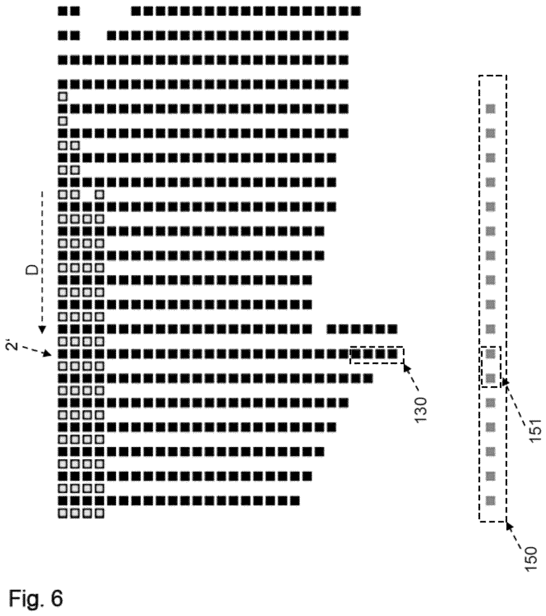

Die Fig. 6 zeigt eine Vielzahl von Bewegungszuständen 2 einer Person mit einem Bewegungsablauf von rechts nach links gemäß Fig. 2 erfasst durch ein Passiererkennungssystem 1 gemäß Fig. 2, wobei der Leistenrumpf 12 der ersten Sensorleiste 10 vierundzwanzig Sensoren aufweist und zusätzlich eine unterhalb der ersten Sensorleiste 10 horizontal verlaufende dritte Sensorleiste angeordnet ist. Der Bereich 150 bildet dabei den mittels der dritten Sensorleiste erfassten Bewegungszustand jedoch in dem einzelnen Bewegungszustand 2' ab. In diesem Bewegungszustand 2' sind die vier unteren Sensoren des Leistenrumpfs 12, dargestellt durch Bereich 130, aktiv gemeldet. Gleichzeitig in dem diskreten Zeitpunkt des Bewegungszustands 2' sind zwei Sensoren, dargestellt durch Bereich 151, aktiv gemeldet, wobei sich der eine Sensor davon örtlich unterhalb der ersten Sensorleiste 10 befindet und der zweite davon in Bewegungsrichtung D hinter der ersten Sensorleiste 10. Die Bewegungsrichtung wird dabei analog zur Erläuterung der Fig. 4a erkannt, sodass darauf geschlossen werden kann, welcher der Sensoren der dritten Sensorleiste hinter der ersten Sensorleiste 10 liegt. Dadurch wird der dargestellte Bewegungsablauf einem Personenfuß und damit einer Person zugeordnet.

Mittels des erfindungsgemäßen Verfahrens und des erfindungsgemäßen Passiererkennungssystems ist somit eine zuverlässige Erkennung von einzelnen Personen bei gleichzeitig niedriger Ausführung des Passiererkennungssystems 1 und bei dicht aufeinander folgenden Personen möglich.

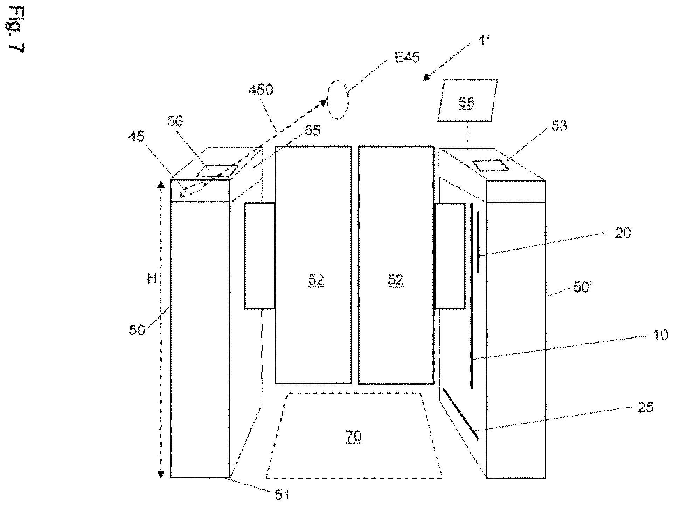

Die Fig. 7 zeigt eine Ansicht einer zweiten Ausführungsform eines erfindungsgemäßen Passiererkennungssystems 1' mit einem Scanner 53, zwei verfahrbaren Türen 52, einer Passierstatus-Anzeige 58, einer schematisch dargestellten dritten Sensorleiste 25 und einem Kopfsensor 45 zur Erfassung eines Erfassungsbereich E45 oberhalb des ersten Gehäuses 50' und des zweiten Gehäuses 50. Der Kopfsensor 45 ist dabei in einem als Oberteil des Gehäuses 50 angeordneten Handlauf 55 angeordnet und erfasst dabei seinen Erfassungsbereich E45 durch einen für den Kopfsensor 45 transparenten Bereich 56 des Handlaufs 55 hindurch. Der Pfeil 450 stellt dabei die schräg nach oben verlaufende Erfassungsrichtung des Kopfsensors 45 dar. Der Erfassungsbereich E45 liegt oberhalb der Gehäuse 50, 50' mit jeweils der Höhe H und oberhalb von 1200 mm ausgehend vom Boden 70 des Passierbereichs. Die erste Sensorleiste 10 und die zweite Sensorleiste 20 sind dabei schematisch dargestellt und entsprechen im Wesentlichen den vorherigen Ausführungen.

Mittels eines derartigen Passiererkennungssystems ist eine zuverlässige Erkennung von Personen bei gleichzeitig niedriger Ausführung der Gehäuse 50, 50' und/oder des Passiererkennungssystems möglich.

### Bezugszeichenliste

- D: Bewegungsrichtung
- H: Höhe
- 1, 1': Passiererkennungssystem
- 2: Bewegungszustand
- 4: Bewegungsablauf
- 10: Erste Sensorleiste
- 11: Leistenkopf
- 12: Leistenrumpf
- 20: Zweite Sensorleiste
- 25: Dritte Sensorleiste
- 30: Rechnereinheit
- 31: Sender
- 32: Empfänger
- 34: Auswerteinheit
- 36: Bereitstellungseinheit
- 38: Umwandlungseinheit
- 40: Anzeige
- 45: Kopfsensor
- 50: Gehäuse
- 51: Bodenkante
- 60: Trennungskriterium
- 70: Boden des Passierbereichs
- 100: Anzahl an aktiven Sensoren des Leistenkopfs
- 110: Personenerkennung
- 111: Senkung der Anzahl an aktiven Sensoren
- 112: Steigerung der Anzahl an aktiven Sensoren
- 200: Anzahl an aktiven Sensoren der zweiten Sensorleiste

- S11 - S18: Sensoren der ersten Sensorleiste
- S21 - S24: Sensoren der zweiten Sensorleiste
- E1 - E8, E45: Erfassungsbereiche

## Patentansprüche

1. Verfahren zur berührungslosen Überwachung von wenigstens einem mehrere Bewegungszustände (2) aufweisenden Bewegungsablauf (4) mit einem Passiererkennungssystem (1), aufweisend eine Bodenkante (51), insbesondere zur Aufstellung auf einen Boden (70) eines zu überwachenden Passierbereichs, wenigstens eine entlang eines vertikalen Vektors (v) verlaufende und mehrere Sensoren (S11 - S18) aufweisende erste Sensorleiste (10) zum Erfassen von Bewegungszuständen (2) innerhalb eines Erfassungsbereichs (E1 - E8) der Sensoren (S11 - S18), eine Rechnereinheit (30) zur Auswertung der Bewegungszustände (2) und/oder des Bewegungsablaufs (4), wobei das Verfahren nachfolgende Schritte umfasst:
- Meldung des jeweiligen Sensors (S11 - S18) der Sensorleiste (10) als aktiv, wenn dieser Sensor (S11 - S18) etwas innerhalb seines Erfassungsbereichs (E1 - E8) erfasst und Meldung des jeweiligen Sensors (S11 - S18) der Sensorleiste (10) als passiv, wenn dieser Sensor (S11 - S18) innerhalb seines Erfassungsbereichs (E1 - E8) nichts erfasst,
- Erfassung von wenigstens einem ersten Bewegungszustand (2) und wenigstens einem zweiten Bewegungszustand (2) durch zumindest die erste Sensorleiste (10) mittels der Meldungen der Sensoren (S11 - S18), wobei der erste Bewegungszustand (2) und der zweite Bewegungszustand (2) zu jeweils mittelbar oder unmittelbar aufeinander folgenden diskreten Zeitpunkten erfasst werden,
- Übermittlung der Bewegungszustände (2) an die Rechnereinheit (30),
- Erkennung wenigstens eines Bewegungsablaufs (4) auf Grundlage der übermittelten Bewegungszustände (2) durch die Rechnereinheit (30), wobei
- sich die erste Sensorleiste (10) in ihrem Einbauzustand maximal bis zu einer Höhe (h) von 1300 mm, bevorzugt 1200 mm, besonders bevorzugt 1100 mm, ganz besonders bevorzugt 1000 mm, ausgehend von der Bodenkante (51) des Passiererkennungssystems (1) erstreckt;
wobei das Verfahren vorsieht, dass die einzelnen Sensoren (S11 - S18) jeweils als Lichtschranke und/oder Einweg-Lichtschranke und/oder Reflexions-Lichtschranke und/oder Infrarot-Lichtschranke ausgebildet sind.

2. Verfahren nach Anspruch 1,
**dadurch gekennzeichnet,**
**dass** zumindest die erste Sensorleiste (10) einen zumindest einen, insbesondere mehrere, der oberen Sensoren (S11 - S14) umfassenden Leistenkopf (11) und einen zumindest einen Sensor (S15, S16, S17, S18), insbesondere mehrere Sensoren (S15 - S18), umfassenden Leistenrumpf (12) unterhalb des Leistenkopfs (11) aufweist.

3. Verfahren nach Anspruch 1 oder 2,
**dadurch gekennzeichnet,**
**dass** die Erkennung des Bewegungsablaufs (4) durch die Rechnereinheit (30) eine Richtungserkennung des Bewegungsablaufs (4) und/oder eine Wendungserkennung mit Hilfe einer zweiten zumindest einen Sensor (S21, S22, S23, S24), insbesondere mehrere Sensoren (S21 - S24), aufweisenden Sensorleiste (20) umfasst, wobei die zweite Sensorleiste neben der ersten Sensorleiste (10), insbesondere parallel zu der ersten Sensorleiste (10), angeordnet ist,
insbesondere wobei eine Wendung des Bewegungsablaufs (4) erkannt wird, wenn:
- in dem ersten Bewegungszustand (2) die Sensoren (S21, S22, S23, S24), insbesondere eine bestimmte Anzahl an Sensoren, insbesondere alle Sensoren, der zweiten Sensorleiste (20) aktiv und zeitlich danach in dem zweiten Bewegungszustand (2) die Sensoren (S11 - S18), insbesondere eine bestimmte Anzahl an Sensoren, insbesondere alle Sensoren des Leistenkopfes, der ersten Sensorleiste (10) aktiv gemeldet werden und
- in einem weiter darauffolgenden Bewegungszustand (2) zuerst die Sensoren (S11 - S18), insbesondere eine bestimmte Anzahl an Sensoren, insbesondere alle Sensoren des Leistenkopfes der ersten Sensorleiste (10) passiv gemeldet und danach in einem noch weiter darauffolgenden Bewegungszustand (2) die Sensoren, insbesondere eine bestimmte Anzahl an Sensoren (S21, S22, S23, S24), insbesondere alle Sensoren, der zweiten Sensorleiste (2) passiv gemeldet werden.

4. Verfahren nach einem der vorangegangenen Ansprüche, **dadurch gekennzeichnet, dass** die Erfassung des zumindest einen Bewegungszustandes (2) eine Ermittlung einer Anzahl an aktiv gemeldeten und/oder an passiv gemeldeten Sensoren, insbesondere innerhalb der ersten Sensorleiste (10), insbesondere innerhalb des Leistenkopfes (11) und/oder des Leistenrumpfes (12) der ersten Sensorleiste (10), und/oder innerhalb der zweiten Sensorleiste (20) umfasst.

5. Verfahren nach einem der vorangegangenen Ansprüche, **dadurch gekennzeichnet, dass** der Bewegungsablauf (4) zumindest einer Person oder zumindest einem Objekt zugeordnet wird.

6. Verfahren nach einem der vorangegangenen Ansprüche, **dadurch gekennzeichnet, dass** der Bewegungsablauf (4) zumindest einer Person zugeordnet wird, wenn innerhalb des ersten Bewegungszustands (2) alle Sensoren (S11 - S14) des Leistenkopfes (11) der ersten Sensorleiste (10) und/oder alle Sensoren (S21 - S24) der zweiten Sensorleiste (20) aktiv gemeldet werden.

7. Verfahren nach einem der vorangegangenen Ansprüche, **dadurch gekennzeichnet, dass** der Bewegungsablauf (4) zumindest einer Person zugeordnet wird, wenn innerhalb des Bewegungsablaufs (4) jeder einzelne Sensor (S11 - S18) der ersten Sensorleiste (10) oder jeder einzelne Sensor (S15 - S18) des Leistenrumpfs (12) der ersten Sensorleiste (10) zumindest einmal aktiv gemeldet wird.

8. Verfahren nach einem der vorangegangenen Ansprüche, **dadurch gekennzeichnet, dass** der Bewegungsablauf (4) zumindest einer Person zugeordnet wird, wenn bezüglich der Anzahl an von der ersten Sensorleiste (10), insbesondere von dem Leistenrumpf (12) der ersten Sensorleiste (10), aktiv gemeldeten Sensoren innerhalb eines einzelnen Bewegungszustandes zumindest einmal eine positive Differenz (112, 122) und/oder zumindest einmal eine negative Differenz (111, 122) zwischen den Bewegungszuständen (2), insbesondere zeitlich mittelbar oder unmittelbar aufeinander folgenden Bewegungszuständen, innerhalb des Bewegungsablaufs (4) ermittelt wird.

9. Verfahren nach einem der vorangegangenen Ansprüche, **dadurch gekennzeichnet, dass** die Erkennung des Bewegungsablaufs (4) eine Abgrenzung des Bewegungsablaufs (4) von einem weiteren Bewegungsablauf (4') auf Grundlage eines Trennungskriteriums (60) umfasst.

10. Verfahren nach einem der vorangegangenen Ansprüche, **dadurch gekennzeichnet, dass** die Erkennung des Bewegungsablaufs (4) eine Abgrenzung des Bewegungsablaufs (4) von einem weiteren Bewegungsablauf (4') auf Grundlage eines Trennungskriteriums (60) umfasst, wobei das Trennungskriterium (60) eingreift, wenn eine bestimmte Differenz zwischen der Anzahl der aktiv gemeldeten Sensoren der ersten Sensorleiste (10), insbesondere des Leistenkopfes (11), insbesondere des Leistenrumpfs (12), innerhalb des ersten Bewegungszustands und der Anzahl der aktiv gemeldeten Sensoren der ersten Sensorleiste (10), insbesondere des Leistenkopfes (11), insbesondere des Leistenrumpfs (12), innerhalb des zweiten Bewegungszustands ermittelt wird.

11. Verfahren nach einem der vorangegangenen Ansprüche, **dadurch gekennzeichnet, dass** die Erkennung des Bewegungsablaufs (4) eine Unterteilung des Bewegungsablaufs (4) von einem weiteren Bewegungsablauf (4') auf Grundlage eines Trennungskriteriums (60) umfasst, wobei das Trennungskriterium (60) eingreift, wenn innerhalb eines einzelnen Bewegungszustands (2) eine bestimmte Differenz zwischen der Anzahl der aktiv gemeldeten Sensoren (S11 - S18) der ersten Sensorleiste (10), insbesondere des Leistenkopfes (11), und der Anzahl der aktiv gemeldeten Sensoren (S21 - S24) der zweiten Sensorleiste (20) ermittelt wird.

12. Computerimplementiertes Verfahren nach einem der vorangegangenen Ansprüche, wobei der Computer von der Rechnereinheit (30) und/oder von einem zusätzlichen Computer gebildet wird.

13. Passiererkennungssystem (1) zur Ausführung des Verfahrens nach einem der vorangegangenen Ansprüche, umfassend eine Bodenkante (51), insbesondere zur Aufstellung auf einen Boden (70) eines zu überwachenden Passierbereichs, wenigstens eine entlang eines vertikalen Vektors (v) verlaufende und mehrere Sensoren (S11 - S18) aufweisende erste Sensorleiste (10), eine Rechnereinheit (30), wobei sich die erste Sensorleiste (10) in ihrem Einbauzustand maximal bis zu einer Höhe (h) von 1300 mm, insbesondere 1200 mm, insbesondere 1100 mm, insbesondere 1000 mm, besonders bevorzugt 900 mm, besonders bevorzugt 850 mm, besonders bevorzugt 800 mm, ausgehend von der Bodenkante (51) des Passiererkennungssystems (1) erstreckt, wobei die einzelnen Sensoren (S11 - S18) jeweils als Lichtschranke und/oder Einweg-Lichtschranke und/oder Reflexions-Lichtschranke und/oder Infrarot-Lichtschranke ausgebildet sind.

14. Passiererkennungssystem (1) nach Anspruch 13, **dadurch gekennzeichnet, dass** das Passiererkennungssystem (1) eine zweite zumindest einen Sensor (S21, S22, S23, S24), insbesondere mehrere Sensoren (S21 - S24), aufweisende Sensorleiste (20) umfasst, wobei die zweite Sensorleiste (20) neben der ersten Sensorleiste (10), insbesondere parallel zu der ersten Sensorleiste (10), angeordnet ist, wobei die zweite Sensorleiste (20) weniger Sensoren als die erste Sensorleiste (10) aufweist und/oder wobei die zweite Sensorleiste (20) kürzer als die erste Sensorleiste (10) ausgebildet ist und/oder wobei die zweite Sensorleiste (20) sich über die Höhe des Leistenkopfs (11) der ersten Sensorleiste (10) erstreckt.

15. Passiererkennungssystem (1) nach einem der vorherigen Ansprüche, **dadurch gekennzeichnet, dass** eine, insbesondere unterhalb der ersten Sensorleiste (10), entlang eines horizontalen Vektors verlaufende dritte Sensorleiste (25) mit zumindest einem Sensor, insbesondere zumindest zwei Sensoren, angeordnet ist.

## Claims

1. A method for contactless monitoring of at least one movement sequence (4) having a plurality of movement states (2) with a passage detection system (1), having a floor edge (51), in particular for installation on a floor (70) of a passage region to be monitored, at least one first sensor strip (10) running along a vertical vector (v) and having a plurality of sensors (S11 - S18) for detecting movement states (2) within a detection region (E1 - E8) of the sensors (S11 - S18), a computer unit (30) for evaluating the movement states (2) and/or the movement sequence (4), wherein the method comprises the following steps:
- Signalling the respective sensor (S11 - S18) of the sensor strip (10) as active if this sensor (S11 - S18) detects something within its detection region (E1 - E8) and signalling the respective sensor (S11 - S18) of the sensor strip (10) as passive if this sensor (S11 - S18) does not detect anything within its detection region (E1 - E8),
- Detecting at least one first movement state (2) and at least one second movement state (2) by at least the first sensor strip (10) by means of the signals from the sensors (S11 - S18), wherein the first movement state (2) and the second movement state (2) are detected at discrete points in time which follow one another directly or indirectly,
- Transmitting the movement states (2) to the computer unit (30),
- Identifying at least one movement sequence (4) on the basis of the transmitted movement states (2) by the computer unit (30), wherein
- the first sensor strip (10) in its installed state extends to a maximum height (h) of 1300 mm, preferably 1200 mm, particularly preferably 1100 mm, quite particularly preferably 1000 mm, starting from the floor edge (51) of the passage identification system (1);
wherein the method provides that the individual sensors (S11 - S18) are each designed as a light barrier and/or a one-way light barrier and/or a reflection light barrier and/or an infrared light barrier.

2. The method according to claim 1,
**characterised in**
**that** at least the first sensor strip (10) has a strip head (11) comprising at least one, in particular a plurality, of the upper sensors (S11 - S14) and a strip body (12) comprising at least one sensor (S15, S16, S17, S18), in particular a plurality of sensors (S15 - S18), below the strip head (11).

3. The method according to claim 1 or 2,
**characterised in**
**that** the identification of the movement sequence (4) by the computer unit (30) comprises a direction identification of the movement sequence (4) and/or a reversal identification with the aid of a second sensor strip (20) having at least one sensor (S21, S22, S23, S24), in particular a plurality of sensors (S21 - S24), wherein the second sensor strip is arranged next to the first sensor strip (10), in particular parallel to the first sensor strip (10),
in particular wherein a reversal of the movement sequence (4) is identified when:
- in the first movement state (2), the sensors (S21, S22, S23, S24), in particular a certain number of sensors, in particular all sensors, of the second sensor strip (20) are actively signalled and then, in the second movement state (2), the sensors (S11 - S18), in particular a certain number of sensors, in particular all sensors of the strip head, of the first sensor strip (10) are actively signalled and
- in a further subsequent movement state (2), first the sensors (S11 - S18) in particular a certain number of sensors, in particular all sensors of the strip head of the first sensor strip (10) are passively signalled and then, in an even further subsequent movement state (2), the sensors, in particular a certain number of sensors (S21, S22, S23, S24), in particular all sensors, of the second sensor strip (2) are passively signalled.

4. The method according to one of the preceding claims, **characterised in that** the detection of the at least one movement state (2) comprises a determination of a number of actively signalled and/or passively signalled sensors, in particular within the first sensor strip (10), in particular within the strip head (11) and/or the strip body (12) of the first sensor strip (10), and/or within the second sensor strip (20).

5. The method according to one of the preceding claims, **characterised in that** the movement sequence (4) is assigned to at least one person or at least one object.

6. The method according to one of the preceding claims, **characterised in that** the movement sequence (4) is assigned to at least one person if, within the first movement state (2), all sensors (S11 - S14) of the strip head (11) of the first sensor strip (10) and/or all sensors (S21 - S24) of the second sensor strip (20) are actively signalled.

7. The method according to one of the preceding claims, **characterised in that** the movement sequence (4) is assigned to at least one person if, within the movement sequence (4), each individual sensor (S11 - S18) of the first sensor strip (10) or each individual sensor (S15 - S18) of the strip body (12) of the first sensor strip (10) is actively signalled at least once.

8. The method according to one of the preceding claims, **characterised in that** the movement sequence (4) is assigned to at least one person if, with regard to the number of sensors actively signalled by the first sensor strip (10), in particular by the strip body (12) of the first sensor strip (10), a positive difference (112, 122) and/or a negative difference (111, 122) between the movement states (2), in particular directly or indirectly successive movement states in terms of time, is determined at least once within the movement sequence (4).

9. The method according to one of the preceding claims, **characterised in that** the identification of the movement sequence (4) comprises a delimitation of the movement sequence (4) from a further movement sequence (4') on the basis of a separation criterion (60).

10. The method according to one of the preceding claims, **characterised in that** the identification of the movement sequence (4) comprises a delimitation of the movement sequence (4) from a further movement sequence (4') on the basis of a separation criterion (60), wherein the separation criterion (60) intervenes, when a certain difference between the number of actively signalled sensors of the first sensor strip (10), in particular of the strip head (11), in particular of the strip body (12), within the first movement state and the number of actively signalled sensors of the first sensor strip (10), in particular of the strip head (11), in particular of the strip body (12), is determined within the second movement state.

11. The method according to one of the preceding claims, **characterised in that** the identification of the movement sequence (4) comprises a subdivision of the movement sequence (4) from a further movement sequence (4') on the basis of a separation criterion (60), wherein the separation criterion (60) intervenes, when a certain difference between the number of actively signalled sensors (S11 - S18) of the first sensor strip (10), in particular of the strip head (11), and the number of actively signalled sensors (S21 - S24) of the second sensor strip (20) is determined within an individual movement state (2).

12. The computer-implemented method according to one of the preceding claims, wherein the computer is formed by the computer unit (30) and/or by an additional computer.

13. A passage detection system (1) for carrying out the method according to one of the preceding claims, comprising a floor edge (51), in particular for installation on a floor (70) of a passage region to be monitored, at least one first sensor strip (10) running along a vertical vector (v) and having a plurality of sensors (S11 - S18), a computer unit (30), wherein the first sensor strip (10) in its installed state extends to a maximum height (h) of 1300 mm, in particular 1200 mm, in particular 1100 mm, in particular 1000 mm, particularly preferably 900 mm, particularly preferably 850 mm, particularly preferably 800 mm, starting from the floor edge (51) of the passage detection system (1), wherein the individual sensors (S11 - S18) are each designed as a light barrier and/or a one-way light barrier and/or a reflection light barrier and/or an infrared light barrier.

14. The passage detection system (1) according to claim 13, **characterised in that** the passage detection system (1) comprises a second sensor strip (20) having at least one sensor (S21, S22, S23, S24), in particular a plurality of sensors (S21 - S24), wherein the second sensor strip (20) is arranged next to the first sensor strip (10), in particular parallel to the first sensor strip (10), wherein the second sensor strip (20) has fewer sensors than the first sensor strip (10) and/or wherein the second sensor strip (20) is shorter than the first sensor strip (10) and/or wherein the second sensor strip (20) extends over the height of the strip head (11) of the first sensor strip (10).

15. The passage detection system (1) according to one of the preceding claims, **characterised in that** a third sensor strip (25) running along a horizontal vector, in particular below the first sensor strip (10), is arranged with at least one sensor, in particular at least two sensors.

## Revendications

1. Procédé de surveillance sans contact d'au moins un déroulement de mouvements (4) présentant plusieurs états de mouvement (2) avec un système de détection de passage (1), présentant un bord de sol (51), en particulier pour l'installation sur un sol (70) d'une zone de passage à surveiller, au moins une première barre de capteurs (10) s'étendant le long d'un vecteur vertical (v) et présentant plusieurs capteurs (S11 à S18) pour l'acquisition d'états de mouvement (2) à l'intérieur d'une zone d'acquisition (E1 à E8) des capteurs (S11 à S18), une unité de calcul (30) pour l'évaluation des états de mouvement (2) et/ou du déroulement de mouvements (4), dans lequel le procédé comprend les étapes suivantes :
- signalisation du capteur (S11 à S18) respectif de la barre de capteurs (10) comme actif, lorsque ce capteur (S11 à S18) acquiert quelque chose à l'intérieur de sa zone d'acquisition (E1 à E8) et signalisation du capteur (S11 à S18) respectif de la barre de capteurs (10) comme passif, lorsque ce capteur (S11 à S18) n'acquiert rien à l'intérieur de sa zone d'acquisition (E1 à E8),
- acquisition d'au moins un premier état de mouvement (2) et d'au moins un second état de mouvement (2) par au moins la première barre de capteurs (10) par le biais des signalisations des capteurs (S11 à S18), dans lequel le premier état de mouvement (2) et le second état de mouvement (2) sont acquis respectivement à des instants discrets se succédant directement ou indirectement,
- transmission des états de mouvement (2) à l'unité de calcul (30),
- détection d'au moins un déroulement de mouvements (4) sur la base des états de mouvements (2) transmis par l'unité de calcul (30), dans lequel
- la première barre de capteurs (10) s'étend, dans son état monté, au maximum jusqu'à une hauteur (h) de 1300 mm, de préférence 1200 mm, de manière particulièrement préférée 1100 mm, de manière tout particulièrement préférée 1000 mm, à partir du bord de sol (51) du système de détection de passage (1) ;
dans lequel le procédé prévoit que les capteurs (S11 à S18) individuels sont respectivement réalisés sous la forme d'une barrière photoélectrique et/ou d'une barrière photoélectrique unidirectionnelle et/ou d'une barrière photoélectrique à réflexion et/ou d'une barrière photoélectrique à infrarouge.

2. Procédé selon la revendication 1,
**caractérisé,**
**en ce qu'**au moins la première barre de capteurs (10) présente une tête de barre (11) comprenant au moins un, en particulier plusieurs, des capteurs supérieurs (S11 à S14) et un corps de barre (12) comprenant au moins un capteur (S15, S16, S17, S18), en particulier plusieurs capteurs (S15 à S18), sous la tête de barre (11).

3. Procédé selon la revendication 1 ou 2,
**caractérisé,**
**en ce que** la détection du déroulement de mouvements (4) par l'unité de calcul (30) comprend une détection de direction du déroulement de mouvements (4) et/ou une détection de virage à l'aide d'une deuxième barre de capteurs (20) présentant au moins un capteur (S21, S22, S23, S24), en particulier plusieurs capteurs (S21 à S24), dans lequel la deuxième barre de capteurs est agencée à côté de la première barre de capteurs (10), en particulier parallèlement à la première barre de capteurs (10),
en particulier dans lequel un virage du déroulement de mouvements (4) est détecté lorsque :
- dans le premier état de mouvement (2), les capteurs (S21, S22, S23, S24), en particulier un nombre déterminé de capteurs, en particulier tous les capteurs, de la deuxième barre de capteurs (20) sont signalés actifs et ensuite, dans le temps, dans le second état de mouvement (2), les capteurs (S11 à S18), en particulier un nombre déterminé de capteurs, en particulier tous les capteurs de la tête de barre, de la première barre de capteurs (10) sont signalés actifs et
- dans un autre état de mouvement (2) qui suit, d'abord les capteurs (S11 à S18), en particulier un nombre déterminé de capteurs, en particulier tous les capteurs de la tête de barre de la première barre de capteurs (10) sont signalés passifs et ensuite, dans un autre état de mouvement (2) qui suit encore, les capteurs, en particulier un nombre déterminé de capteurs (S21, S22, S23, S24), en particulier tous les capteurs, de la deuxième barre de capteurs (2) sont signalés passifs.

4. Procédé selon l'une des revendications précédentes, **caractérisé en ce que** la détection de l'au moins un état de mouvement (2) comprend une définition d'un nombre de capteurs signalés actifs et/ou de capteurs signalés passifs, en particulier à l'intérieur de la première barre de capteurs (10), en particulier à l'intérieur de la tête de barre (11) et/ou du corps de barre (12) de la première barre de capteurs (10), et/ou à l'intérieur de la deuxième barre de capteurs (20).

5. Procédé selon l'une des revendications précédentes, **caractérisé en ce que** le déroulement de mouvements (4) est associé à au moins une personne ou à au moins un objet.

6. Procédé selon l'une des revendications précédentes, **caractérisé en ce que** le déroulement de mouvements (4) est associé à au moins une personne lorsque, à l'intérieur du premier état de mouvement (2), tous les capteurs (S11 à S14) de la tête de barre (11) de la première barre de capteurs (10) et/ou tous les capteurs (S21 à S24) de la deuxième barre de capteurs (20) sont signalés actifs.

7. Procédé selon l'une des revendications précédentes, **caractérisé en ce que,** e déroulement de mouvements (4) est associé à au moins une personne lorsque, à l'intérieur du déroulement de mouvements (4), chaque capteur (S11 à S18) individuel de la première barre de capteurs (10) ou chaque capteur (S15 à S18) individuel du corps de barre (12) de la première barre de capteurs (10) est signalé actif au moins une fois.

8. Procédé selon l'une des revendications précédentes, **caractérisé en ce que** le déroulement de mouvements (4) est associé à au moins une personne lorsque, en ce qui concerne le nombre de capteurs signalés actifs par la première barre de capteurs (10), en particulier par le corps de barre (12) de la première barre de capteurs (10) à l'intérieur d'un état de mouvement individuel, une différence positive (112, 122) et/ou au moins une fois une différence négative (111, 122) est définie au moins une fois entre les états de mouvement (2), en particulier des états de mouvement qui se succèdent dans le temps directement ou indirectement, à l'intérieur du déroulement de mouvements (4).

9. Procédé selon l'une des revendications précédentes, **caractérisé en ce que** la détection du déroulement de mouvements (4) comprend une délimitation du déroulement de mouvements (4) par rapport à un autre déroulement de mouvements (4') sur la base d'un critère de séparation (60).

10. Procédé selon l'une des revendications précédentes, **caractérisé en ce que** la détection du déroulement de mouvements (4) comprend une délimitation du mouvement (4) par rapport à un autre déroulement de mouvements (4') sur la base d'un critère de séparation (60), dans lequel le critère de séparation (60) intervient, lorsqu'une différence déterminée est définie entre le nombre de capteurs signalés actifs de la première barre de capteurs (10), en particulier de la tête de barre (11), en particulier du corps de barre (12), à l'intérieur du premier état de mouvement et le nombre de capteurs signalés actifs de la première barre de capteurs (10), en particulier de la tête de barre (11), en particulier du corps de barre (12), à l'intérieur du second état de mouvement.

11. Procédé selon l'une des revendications précédentes, **caractérisé en ce que** la détection du déroulement de mouvements (4) comprend une subdivision du déroulement de mouvements (4) d'un autre déroulement de mouvements (4') sur la base d'un critère de séparation (60), dans lequel le critère de séparation (60) intervient, si, à l'intérieur d'un état de mouvement (2) individuel, une différence déterminée est définie entre le nombre des capteurs (S11 à S18) signalés actifs de la première barre de capteurs (10), en particulier de la tête de barre (11), et le nombre des capteurs (S21 à S24) signalés actifs de la deuxième barre de capteurs (20).

12. Procédé mis en œuvre par ordinateur selon l'une des revendications précédentes, dans lequel l'ordinateur est constitué par l'unité de calcul (30) et/ou par un ordinateur supplémentaire.

13. Système de détection de passage (1) pour l'exécution du procédé selon l'une des revendications précédentes, comprenant un bord de sol (51), en particulier pour l'installation sur un sol (70) d'une zone de passage à surveiller, au moins une première barre de capteurs (10) s'étendant le long d'un vecteur vertical (v) et présentant plusieurs capteurs (S11 à S18), une unité de calcul (30), dans lequel la première barre de capteurs (10) s'étend dans son état monté au maximum jusqu'à une hauteur (h) de 1300 mm, en particulier 1200 mm, en particulier 1100 mm, en particulier 1000 mm, de manière particulière préférée 900 mm, de manière particulièrement préférée 850 mm, de manière particulièrement préférée 800 mm, à partir du bord de sol (51) du système de détection de passage (1), dans lequel les capteurs (S11 à S18) individuels sont réalisés respectivement comme une barrière photoélectrique et/ou une barrière photoélectrique unidirectionnelle et/ou une barrière photoélectrique à réflexion et/ou une barrière photoélectrique à infrarouge.

14. Système de détection de passage (1) selon la revendication 13, **caractérisé en ce que** le système de détection de passage (1) comprend une deuxième barre de capteurs (20) présentant au moins un capteur (S21, S22, S23, S24), en particulier plusieurs capteurs (S21 à S24), dans lequel la deuxième barre de capteurs (20) est agencée à côté de la première barre de capteurs (10), en particulier parallèlement à la première barre de capteurs (10), dans lequel la deuxième barre de capteurs (20) présente moins de capteurs que la première barre de capteurs (10) et/ou dans lequel la deuxième barre de capteurs (20) est réalisée plus courte que la première barre de capteurs (10) et/ou dans lequel la deuxième barre de capteurs (20) s'étend sur la hauteur de la tête de barre (11) de la première barre de capteurs (10).

15. Système de détection de passage (1) selon l'une des revendications précédentes, **caractérisé en ce qu'une** troisième barre de capteurs (25) s'étendant le long d'un vecteur horizontal, en particulier en dessous de la première barre de capteurs (10), est agencée avec au moins un capteur, en particulier au moins deux capteurs.
